(19) Europäisches Patentamt
European Patent Office
Office européen des brevets

(11) EP 3 235 549 A1

(12) EUROPEAN PATENT APPLICATION

(43) Date of publication:
25.10.2017 Bulletin 2017/43

(51) Int Cl.:
A63F 13/86 (2014.01)          A63F 13/798 (2014.01)
A63F 13/335 (2014.01)         G06F 9/455 (2006.01)

(21) Application number: 16166387.7

(22) Date of filing: 21.04.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: KooJoo Ltd
London EC2A 4NE (GB)

(72) Inventors:
• Kirkland, James W
London, EC2A 4NE (GB)
• Niewczasinski, Jane M
London, EC2A 4NE (GB)

(74) Representative: Horler, Philip John et al
Withers & Rogers LLP
4 More London Riverside
London SE1 2AU (GB)

(54) **GAMEPLAY TRIGGER DETECTION**

(57)  Embodiments of the present disclosure aim to improve upon methods and systems for providing video gameplay outputs, and particularly in the context of producing gameplay output video. A software container is arranged to monitor the gameplay state of a game and to create trigger inputs for stimulating gameplay output events from a gameplay output module.

```
                  ┌──────────────────────┐
                  │ load software container │ ─ 501
                  └──────────────────────┘
                             │
                  ┌──────────────────────┐
                  │  execute game program  │ ─ 502
                  │ through software container │
                  └──────────────────────┘
                             │
                  ┌──────────────────────┐
                  │ monitor read / write requests │ ─ 503
                  └──────────────────────┘
                             │
                          ◇ Request
              504 ─  contains memory location    no
                     in database /config
                          file?
                             │ yes
                  ┌──────────────────────┐
                  │   create trigger input  │ ─ 505
                  └──────────────────────┘
                             │
                  ┌──────────────────────┐
                  │  provide trigger input to │ ─ 506
                  │  Gameplay Event Module  │
                  └──────────────────────┘
                             │
                  ┌──────────────────────┐
                  │ Extract gameplay attribute value │ ─ 507
                  └──────────────────────┘
                             │
                  ┌──────────────────────┐
                  │ pass through relevant filters and │ ─ 508
                  │ create output if filter criteria satisfied │
                  └──────────────────────┘
                             │
          yes   ┌──────────────────────┐
                │  game still executing  │ ─ 509
                └──────────────────────┘
                             │ no
                          END ─ 510
```

FIG. 5

EP 3 235 549 A1

**Description**

Technical Field

The invention relates to a method and system for producing gameplay output, and in some embodiments producing gameplay output video.

Background to the Invention and Prior Art

Video games are nowadays often distributed and played via an online platform which users access via the internet. Online platforms provide a video game's developer access to a wider market than would be achieved via direct distribution. An example of popular online platform at the time of writing is Kongregate, which allows users to play games for free. Other platforms require users to pay for access to games. A 3rd party games platform may create additional features as incentives for a game developer to distribute their content through the platform. Examples of such features include the ability for a user to share video of themselves playing the game, or the collection of statistics relating to the game, including user achievement rankings.

The rise of YouTube and other similar video hosting platforms has seen a similar rise in the popularity of sharing video clips of gameplay footage. Video capture and social media features are typically designed into a video game, in order that users may share their gameplay experiences. Since the features have to be included at the coding stage of producing the game in order to record and output video, it is difficult for a 3rd party system to provide these features without the developer having to provide a customized version of the game, typically made using a specific software developer kit (SDK) created for and distributed by the external platform provider. The need for features to be built into the game also makes it hard to create a consistent user experience across a library of games created by a number of different publishers and hosted by such a 3rd party platform. Some social media platforms provide Application Program Interfaces (APIs) to link into their platforms, however for such integration to function the game software itself must be created using these APIs.

Achievements and recorded gameplay footage are typically integrated into a game in a restricted fashion. For example, a game may share a score on an achievements board, but if it is later determined that the time take to reach the score might also be a popular achievement type to share, it would often require an update to the game itself to be able to provide this functionality. Furthermore, all games for which this achievement may be appropriate would have to be updated if the 3rd party platform were to make these features consistent across titles.

In addition, large amounts of manual input from the user is often required to support features such as video recording and publishing. Recorded gameplay footage is most often edited by a user, who must choose a particular time to start and stop the recording, and often involves having to use sophisticated video editing software before gameplay footage is published to a video sharing site or social network. Furthermore, finding video relevant to the current gameplay relies on each user diligently labeling their footage with appropriate keywords.

Some older video games do not provide useful pause/resume features, and this can be hard to add to a game when there is no clear marker from which to resume the game. Manual game saves are cumbersome, and arbitrary. Consider a 3rd party platform wanting to offer seamless continuity across devices or gameplay sessions. Identifying relevant sections to trigger a game save is non-trivial. If a program shuts down unexpectedly or a user simply forgets to save they may lose some of the progress they have made.

Prior Art

As noted above, existing systems rely on SDKs being provided to developers in order that they may incorporate gameplay output features, such as the ability to create video, by coding into the game the relevant features. One popular such system allows for the game developer to write features into the game code which, at specific action points in the game when the game software is running, will cause an output video to be generated.

There is a need to improve the quality of gameplay video content extractable from user gameplay, to add to the user experience.

Summary of the Invention

Embodiments of the present disclosure aim to improve upon methods and systems for providing video gameplay outputs, and particularly in the context of producing gameplay output video.

According to a first aspect of the invention, there is provided executing a game program using a software container, and at the software container, monitoring a current gameplay state of the game, detecting a predefined gameplay state, and providing a trigger input comprising a gameplay state attribute to a gameplay event module, and in response to receiving a trigger input, at the gameplay event module: creating a gameplay event output in dependence upon the gameplay attribute value.

The advantage of the method of the invention is the fact that meaningful output content can be produced from a generic game, without the need for bespoke modifications to be made by the game's developers. This is because the software container is arranged to implement the relevant features. The method provides a solution which is highly configurable and adaptable, and the software container can implement instructions provided in the configuration file after a given game program has been published.

Preferably, the method further comprises providing a configuration table of predetermined memory locations, and wherein monitoring the current gameplay state of the game is done by checking the read requests and write requests that the game program makes to a memory, the trigger input being elicited when at the predefined gameplay state the program makes a read request or write request to one of the predetermined memory locations.

From the simple provision of a list of pertinent memory locations the software container detects gameplay states and a diverse set of outputs can be extracted from a game after it has been published, as described above.

Preferably, the execution of the program comprises retrieving a predefined payload from a database and inserting said payload into the program prior to launching the program, wherein the payload comprises instructions which when executed automatically elicit the trigger input.

Preferably, the program produces a stream of output gameplay video and audio content which may be captured by the container, wherein creating the gameplay event output comprises automatically producing an output gameplay video, and creating the gameplay event output comprises automatically producing an output gameplay video. Automatically creating output video upon the detection of a gameplay state by a software container, as well as the advantageous features outlined above, improves a user experience in that a broad range of video can be extracted from the game without the need for extensive re-coding of the program software.

Preferably, creating the gameplay event output comprises selecting a start point and an end point of a portion of video and audio content in a buffer memory to automatically produce the output gameplay video.

Output recorded video footage does not require specific start and stop times to be manually fine-tuned by the user,

Preferably, creating the gameplay event output comprises creating metadata from the extracted gameplay state attribute value, the metadata relating to the gameplay state detected.

As stated above the invention allows for any gameplay state data to be extracted from the game, and a user can simply select from automatically edited and labelled clips. The simpler video editing improves accessibility for visually impaired users.

Preferably, the gameplay event output comprises a gameplay video, and creating metadata comprises inserting chapter markers into the gameplay video, wherein the chapter markers include a textual label extracted from the event value attribute.

Preferably, the gameplay output comprises performing a search using a search term is extracted from the event value attribute.

Preferably, the method further comprises detecting, at an event filter: a first trigger input and a second trigger input, and wherein creating the event output is done where the gameplay state attribute value of the second trigger input meets a predefined threshold criterion, and wherein the gameplay event output comprises a duration value, the duration value being the difference in time between detecting the first trigger input and the second trigger input.

Preferably, the method further comprises receiving, at the gameplay event module a plurality of trigger inputs, wherein the gameplay event output is created when a trigger input comprises a gameplay state attribute value which is higher than a predefined threshold criterion.

Preferably, the gameplay event output is automatically published to a social network database.

Relevant video can be found more easily since more structure data is available to facilitate the search both from the perspective of indexing and constructing the search terms. Achievements can be automatically shared on social media without the game developer having to explicitly integrate their game. Video bandwidth for recording can be reduced by keeping a continuous recording buffer small and triggering clips to be sent to a cloud service with chapter markers allowing the clips to be reassembled and edited on more powerful hardware. This can be particularly useful when recording longer clips on mobile devices. By using gameplay events to detect a position within a game, it is possible to target highly relevant content to the player, for example linking to a gaming site or blog showing tips and tricks for that section. Detecting completion of a game may for example trigger an advert for the player to try similar games or the next game in a series.

According to a further aspect of the invention, there is provided a computing device, arranged to carry out a method comprising executing a game program using a software container, wherein the program produces a stream of output gameplay video and audio content which may be captured by the container; and at the software container: monitoring a current gameplay state of the game, detecting a predefined gameplay state, providing a trigger input comprising a gameplay state attribute to a gameplay event module, and in response to receiving a trigger input, at the gameplay event module: extracting the gameplay state attribute value from the trigger input; and creating a gameplay event output in dependence upon the extracted attribute value.

According to a still further aspect of the invention, there is provided a system, comprising: a server, comprising a processor running a gaming platform, the gaming platform arranged to receive a request from a user device to execute game programs; a memory, arranged to be accessed during the execution of game programs, a gameplay event module, wherein: the game program is arranged to be executed in a software container running on the server, wherein the program produces a stream of output gameplay video and audio content which may be captured by the container. The software container is arranged to monitor a current gameplay state of the program and detect a predefined gameplay state, the detection of a the predefined gameplay state eliciting a trigger input comprising a gameplay state attribute, the trigger input being provided by the software container to the gameplay event module, and the gameplay event module is arranged to extract the gameplay state attribute value from the trigger input; and create a gameplay event output in dependence upon the extracted attribute value in response to receiving a trigger input.

Further features and advantages of embodiments of the invention will be apparent from the appended claims.

Brief Description of the Drawings

Further features and advantages of the present invention will become apparent from the following description of an embodiment thereof, presented by way of example only, and by reference to the drawings, wherein like reference numerals refer to like parts, and wherein:

Figure 1 shows a system of the prior art;

Figure 2 shows a system for implementing the present invention;

Figure 3 shows a further system for implementing the present invention;

Figure 4 is an example of the triggering of gameplay event outputs via a system of event filters;

Figure 5 is a flow chart which shows a process of producing gameplay event outputs;

Figure 6 is a flow chart which shows a variant process of producing gameplay event outputs.

Description of the Embodiments

A brief overview of embodiments of the invention will now be given.

As noted previously, compatibility issues arise from the point of view of a game hosting platform when attempting to provide a uniform set of features across the various games hosted on the platform, so that the user experience is seamless and consistent. Embodiments of the present invention disclosed herein allow for the extraction of gameplay state information to describe any kind of user achievement without the need for reworking the underlying software code of the game or for the developer having to provide a customised version of their game.

Gameplay trigger detection is the process of running a piece of software (i.e. a game) using a software container and automatically marking events in the use of the software which are relevant to capturing video, sharing achievements or gameplay state saves.

More particularly, embodiments of the invention are based on the realisation that inspecting generic data points relating to the current state of the game and using these to trigger further features which are in the control of the software container allow for a flexible degree of support for features provided by the container, rather than having to have them be directly implemented by the underlying software. The user experience is also improved, since a broader range of features become available, as will be elucidated below.

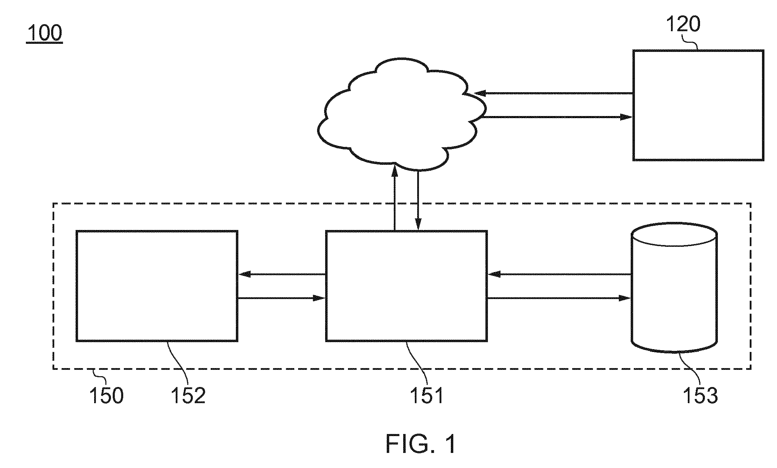

An example of a standard gameplay platform system arrangement is shown in Figure 1. A system 100 comprises a game server 120 which communicates with a computing device 150 via a network. The computing device 150 is arranged to execute one or more game software products via a central processing unit (not shown). Computing device may be a desktop computer, a wireless computing device enabled with mobile network connectivity or Wi-Fi connectivity, or any other computing device. A user of computing device 150 may use an internet browser, and navigate to an online gaming platform website hosted by a gaming platform provider. As is standard, game program software 152 is provided to the computing device 150 from the game server 120 and executed on the computing device 150 through a software container 151. The game program software 152, when run through the software container 151, may access a local memory 153 provided on the computing device 150. For the purposes of this disclosure, the term software container refers to an entire application runtime environment needed to run an application - libraries, configuration files and other binaries. The local memory 153 may be a physical memory or virtual memory. The software container provides a user interface through which the user interacts with the game program.

The execution of a game program by the software container allows the user to play a game locally on the computing device 150. A game will at any given time comprise a gameplay state, indicating the present status of the game. Gameplay states include any information about a present state of a game being played which might be used in the creation of a gameplay video, or in the aggregation of statistics regarding a user's gameplay usage, skills or expertise. These include, in the case of a platform game for example: time taken to complete a level, present health, present number of lives etc. Gameplay state events (a term used here interchangeably with gameplay states) include completing a level, losing a life, receiving a health bonus, defeating a particular opponent etc.

The software container may maintain additional states to facilitate features provided by the platform, for example a user session commonly created for web applications to track the identity of the user of the application. The software container may optionally make context variables (such as username or game title) available as parameters used in gameplay events.

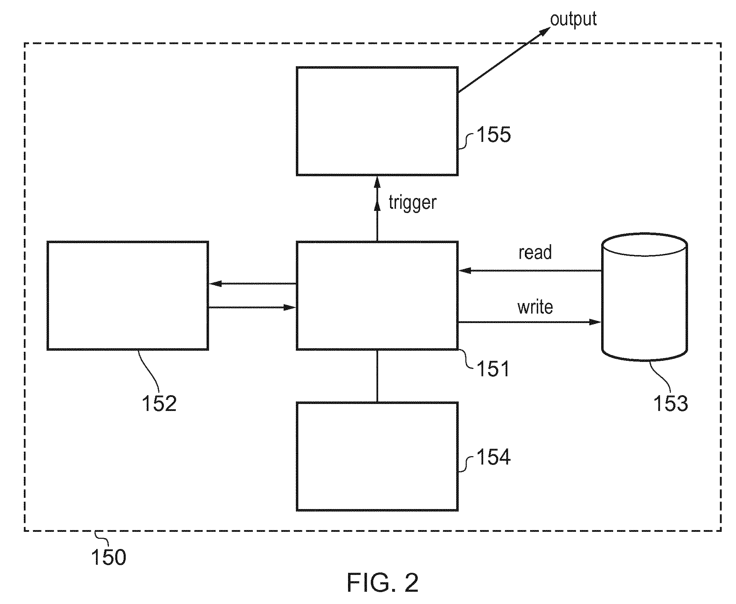

Figure 2 shows a system according to an embodiment of the present invention. The system comprises the features of that shown in Figure 1, with additional features described below. The software container 151 is arranged to capture audio and video output by the game program software. This may be achieved by using freely available software such a Canvas, provided by ACD Systems International Inc. and AudioContext, created by the Mozilla developer network. As mentioned above, when the game program software is executed on the computing device 150, it will make read and write requests to the local memory 153. From foreknowledge of the nature of the read and write requests, which include generic data points about the current state of the game being played, and gameplay output events can be triggered.

When games are programmed there is typically a portion of memory that is used to record the level as an integer value. Other important values are stored in memory, such as the number of lives remaining, and the level data itself (for example the terrain in a platform game).

The technique employed in the present invention is to extract relevant gameplay state attributes by setting up observers for a change in game state, for example monitoring when a particular variable or memory address is written to (i.e. level = level + 1), or when a variable or memory address is read from (i.e. the start of the terrain data for level 2).

In the embodiment shown in Figure 2, the software container 151 is provided with, or has access to, a database or configuration file 154 which comprises specific locations in the memory 153 which relate to attributes of the game which are relevant for producing a gameplay output. The software container 151 is therefore arranged to intercept data which is the subject of a read request or write request to a given memory location. In the event that the game program software makes a read or write request to a predefined memory location at a given point of a game, a trigger input is generated by the software container 151 sent to a gameplay event module 155.

The configuration for a simple memory interception will require the following properties:

- name (the event to be triggered)
- mode (e.g. read or write)
- memory address
- length (i.e. for a contiguous block of memory)

An input of this type is created using the definition (and implicit declaration):

$$name = memory(mode, address, length)$$

For example:

$$level = memory(write, 1234, 1)$$

In this example, the token "level" can now be used declaratively as an input (see further examples, below).

Where a length greater than 1 is specified, a sequence of reads (or substitute "read" with "write" as appropriate) is treated as follows:

- read (address) : start read intercept
- read (address + 1) : append bytes
- .....
- read (address + length - 1) : append bytes, stop read intercept, trigger gameplay event

Where a game emulator is being used, the software can directly intercept reads and writes to the memory. It is possible to use aspect-oriented programming techniques which may be used to the same effect as described here. The key part is the database or configuration file, which can be applied to multiple different game programs without the need for writing bespoke code for each individual implementation.

This method produces a single input representing the gameplay state to the main gameplay event system 155, but in the system of the present invention multiple configurations of this type are implemented in parallel to capture different types of event or achieve more sophisticated effects which will be further discussed below.

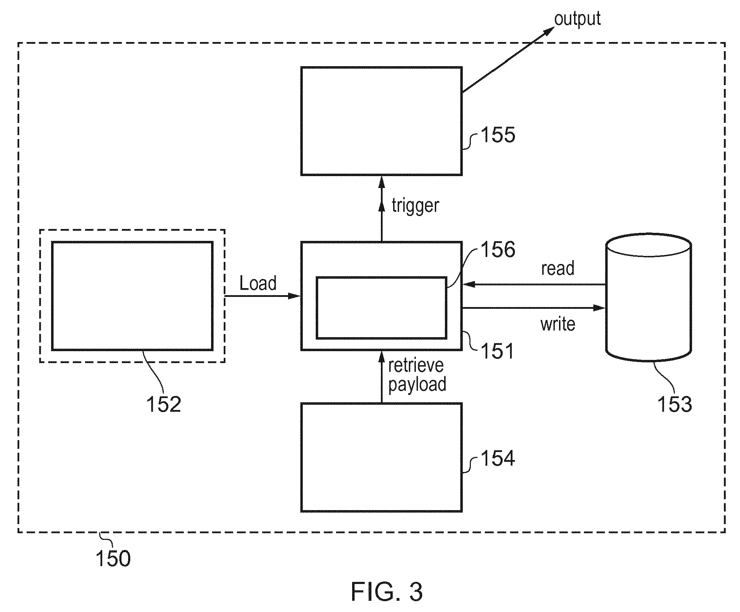

A second embodiment of the present invention is shown in Figure 3. In this variant, rather than the software container 151 consulting a database or configuration file when performing memory intercepts, the software container 151 running the game program 152 may apply automated modifications to the game program 152 each time it is loaded.

As previously described, the memory locations of interest for capturing relevant gameplay state information are identified (for example by byte position), and code is injected automatically to a specific point within the program when the program is executed, either as plain text or binary data as appropriate. A payload is injected which contains appropriate instructions for automatically creating trigger inputs to be gameplay event module.

The following example configuration is available to the software loader:

- name (the event to be triggered)
- file (specific file to inject the gameplay event triggers)
- location (e.g. the number of bytes into the file to start the payload injection)
- replace_bytes (e.g. the number of bytes from location to be replaced with the payload
- if the payload is not equal in size to the number of bytes replaced then everything after that point is shifted accordingly)
- payload (i.e. the code to inject, in base64 encoding)

An input of this type is created using the definition (and implicit declaration):

$$name = inject(file,location,replace\_bytes,payload)$$

For example:

$$level = inject(\text{"main.js"},34,0,aabbcc)$$

In this example, the token "level" can now be used declaratively as an input (see later examples). Base64 encoding allows binary data to be stored easily. An example of the base64 encoded payload may decode to the following JavaScript language excerpt:

```
canvas.dispatchEvent(new GameEvent('pieces', { bubbles: true, cancellable: true, detail: { value: p } }));
```

Note that the injected code is written based on the knowledge that 'canvas' and 'p' are variables in scope on line 34 of the file main.js. This code is created for each specific game and is stored in a database so that it can be injected automatically based on the game program software 152 that has been loaded by the software container 151. The details relating to the creation of the code to be injected are not discussed in this document.

For software distributed using an interpreted language, the value of 'replace_bytes' is typically 0, since the code after the injected payload is not normally be impacted by a change in byte position within the file (as long as the injected code does not affect the programmatic scope of the surrounding code).

For software distributed within a binary executable, the injection typically takes place in two stages. The first replaces a value within the file that typically stores the address of a function pointer (where 'replace_bytes' is equal to the size of the first payload) with a value that points to the end of the file, causing the program to call different code at that point. The second injection is then typically at the end of the file at the address corresponding to the value injected in the first payload.

The payload can typically be created without assistance from the original software developer, although the method described herein assumes that the payload has already been defined and can be reused each time the software is loaded. In this implementation, the game program 151 will continue to execute as originally intended. In pseudo-code the effect of the payload injection might be:

- instruction 1

- instruction 2
- ....
- modified instruction n
- instruction n+1
- ....

where "modified instruction n" carries out instruction n and then triggers a gameplay event using available in-scope variables (also including variables accessible through reflection).

This method produces a single input to the main gameplay event system, but multiple configurations of this type can be run in parallel to capture different types of event or achieve more sophisticated effects, as discussed below.

The software container 151 provides trigger inputs to a gameplay event module 155 when the aforementioned methods are carried out and appropriate gameplay states are detected. Once a trigger input is detected at the gameplay event module 154, a gameplay output event is created, which will have parameters that are specific to the nature of the event type.

Example properties which might be applied to the event by the gameplay event module 155 are:

- name (as defined by input method definition)
- value (the value harvested by the input method)
- start_timestamp
- duration
- title (the name of the game)
- publisher (the developer / publisher)
- platform (the platform that the game was written for - slightly different versions may be produced for different platforms)
- user id

For implementation, the properties title, publisher, platform and user_id are typically stored in a user session, and so an implementer may choose reference them via the session instead of the event.

Most gameplay events which are generated will be instantaneous "snap-shots" of the gameplay state and so will have a duration of zero - these might be changes of state (level up or loss of a life), for example. However, the gameplay event module is arranged to allow for multiple inputs to be consumed prior to an event output be generated, and so events may therefore have a duration, as explained below.

Therefore, input events may be linked using filters. A filter works by observing trigger input events of a particular type and applying rules before emitting a new output event. For example a filter may consume multiple trigger input events waiting for a particular value to be reached and then emit a single output event.

Below is provided a non-exhaustive list of filters which may be provided in the gameplay event module and applied to the trigger inputs. This is useful for the intelligent labelling and production of video output. For instance a first trigger input might indicate a particular location has been reached in the game, and further trigger inputs may be collected prior to the game player leaving that location. The filter may cause the intervening trigger inputs to be either ignored, or stored, and an event output or outputs created only when a particular further condition is satisfied.

Relative change: A filter is arranged to consume a series of events of a type inferred by the property being observed (for example, level_value), and trigger a new event any time the given threshold is breached within the wait time. The filter is constructed as follows, where name determines the value of the name property that will be assigned to the new event by the container:

$$name = relative(property, trigger\_ratio, wait\_time)$$

- property (name of property to observe, e.g. level.value)
- trigger_ratio (threshold ratio between min and max values over a rolling time frame)
- wait_time (how long to wait before a new event of this type can be fired)

An example of where this might be useful could be where a sudden change in health points is detected in an opponent during a fighting game to indicate that an exciting sequence of moves has been detected.

Absolute change: A filter is arranged to consume a series of events of a type which is inferred by the property being observed, and a new event is triggered any time the given threshold is breached within the wait time. The filter is constructed as follows, where name determines the value of the name property that will be assigned to the new event by the container:

$$name = absolute(property, trigger\_increment, wait\_time)$$

- property (name of property to observe, e.g. level.value)
- trigger_increment (threshold difference between min and max values over a rolling time frame)
- wait_time (how long to wait before a new event of this type can be fired)

An example of where this might be useful could be when a (negative) change in the amount of available ammunition has been detected in a war game to indicate that a battle has started.

Barrier: A filter is arranged to consume a series of events of type inferred by the property being observed, and trigger a new event any time the given threshold is breached. Further events are ignored until the reset threshold defined by "reset_value" is breached. The filter is constructed as follows, where name determines the value of the name property that will be assigned to the new event by the container:

$$name = barrier(property, trigger\_value, reset\_value)$$

- property (name of property to observe, e.g. level.value)
- trigger_value (trigger event only when the value of the input event passes this value_
- reset_value (disable new events of this type until the value of the input event crosses back over this threshold)

An example of where this might be useful could be when the size or strength of a player reaches a certain level so that the start of a stage can be ignored (which might be a lengthy sequence of collecting food or mass and may be considered uninteresting).

Sustain: A filter is arranged to consume a series of events of type inferred by the property being observed, and trigger a new event as follows:

1. Define queue to store input events as they are received, and start with empty queue
2. Consume input events by appending to queue as they are received
3. Reset timer to wait for next event
4. If no new event are consumed before wait time is exceeded then:

- If queue size is less than min_occurs then empty queue and discard events
- If queue size is greater than or equal to min_occurs the trigger new event where start_timestamp is equal to the start_timestamp of the first event captured into the queue, and duration is the difference between the start_timestamp value of the first and last events captured into the queue

5. If a new event is consumed before wait_time is exceeded then go to step 2.

The filter is constructed as follows, where name determines the value of the name property that will be assigned to the new event by the container:

$$name = sustain(property, min\_occurs, wait\_time)$$

- property (name of property to observe, e.g. level.value. can also be an array using [] notation)
- min_occurs (number of events to observe before acknowledging a sustained series of events)
- wait_time (maximum time between events to be included in current sustained series - the timer is reset after each valid trigger within the current wait time)

An example of where this may be useful could be where a particular move may be detected as an input event (e.g. in a fighting game) and a player tries to do as many as possible in sequence.

Stopwatch: A filter is arranged to consume a series of events of type inferred by the property being observed, and trigger a new event each time an input event is consumed. The properties of the new event will be the same as those of the previous event, but the duration will be set to be the time difference between the two events, and the name will be defined by the constructor statement.

The filter is constructed as follows, where name determines the value of the name property that will be assigned to the new event by the container:

$$name = stopwatch(event)$$

- event (name of event to observe, e.g. level)

An example of where this might be useful could be to capture the start and end times of a particular level within a game, producing both an edited video clip and also a statistic that can be compared against other attempts at the same level to produce an achievement of best time.

Map: Transformation to convert a value into something more meaningful, for example when a stage in a game has a proper name, rather than a numerical level.

The filter is constructed as follows, where name determines the value of the name property that will be assigned to the new event by the container:

$$name = map(property,key0,value0,key1,value1,\ldots,keyN,valueN)$$

- key0 (a key in the map)
- value0 (the value corresponding to key0)
- key1 (a key in the map)
- value1 (the value corresponding to key1)
- ...
- keyN (a key in the map)
- valueN (the value corresponding to keyN)

This filter can be employed where the current stage or level within a game is represented as an integer value that is not meaningful to a player. Each integer value could be mapped to a more meaningful description of that stage or level.

Printf: Transformation to convert a value into something more meaningful, for example constructing a search term for a particular level. Printf is a standard function provided by many programming languages.

$$name = printf(format,property0,property1,\ldots,propertyN)$$

- format (in standard printf form)
- property0
- property1
- ...
- propertyN

This filter is applied where a game represents a score as an n-digit number with each digit stored in a separate memory location. The following may be used to concatenate the digits appropriately:

$$score = printf(``\%d\%d\%d\%d",digit0.value,digit1.value,digit2.value,digit3.value)$$

Expression: Perform a calculation based on one or more input values. Values are injected in a similar fashion to printf, such that the format string is then evaluated once all of the value substitutions have been made

$$name = expression(format,property0,property1,\ldots,propertyN)$$

- format (in standard printf form)
- property0
- property1
- ...

- propertyN

This filter can be employed where a game represents a score on screen with a multiplier of 100 with respect to the underlying score stored in memory. The following may be used to convert the raw value:

$$score = expression("100 * \%d", raw\_score.value)$$

Debounce: Arranged to consume a number of events in quick succession of a type inferred by the property being observed, and trigger a single new event representing the latest value after the specified timeout. Each time an event is captured the timer is reset such that multiple events captured within the timeout are ignored. Once the timeout is reached the event is fired and the debouncer is ready for a new series of events.

$$name = debounce(property, timeout)$$

- property (name of property to observe, e.g. level.value)
- timeout (how long to wait before a new event of this type can be fired)

This filter might be applied where a game updates a particular variable with the same value several times in quick succession (for reasons unknown, but is observed nonetheless). If, for example, the level ID is written to twice at the start of each level, use of this function would collapse this to a single event and avoid erroneous statistics being captured subsequent to this event.

Dissipate: Consume a series of events of type inferred by the property being observed, and trigger a new event representing the change in value of a property between trigger events.

$$name = dissipate(reset\_trigger, property)$$

- reset_trigger (calculate the new value each time an event of this type is fired, e.g. new level)
- property (name of property to dissipate value of)

This filter might be applied to capture the score gained separately in each level, where the game only records the total score at any one time.

Accumulate: Consume a series of events of type inferred by the property being observed, and trigger a new event representing the cumulative total of a particular field within the timespan of an independent trigger event.

$$name = accumulate(reset\_trigger, property)$$

- reset_trigger (reset the cumulative value each time an event of this type is fired, e.g. new level)
- property (name of property to accumulate value of)

An example of where this might be useful could be where a game comprises collectable items, and for instance a number of coins is stored in a game independently for each level, and we wish to capture the total number of coins collected of the entire game.

The container may define additional filters and transformations over time to support more sophisticated features.

Gameplay Event outputs

The output of the system is a series of event consumers are applications or scripts that request notification of events, and then perform tasks when specific events occur. Event consumers are scripts that request notification of particular events, and then perform tasks - in this case produce a gameplay event output - when those specific events occur. The gameplay event output is an output which is triggered by and contains information regarding a particular state of a game. This may be output gameplay video footage, or any information contained in the gameplay state which generated the trigger input comprising that information.

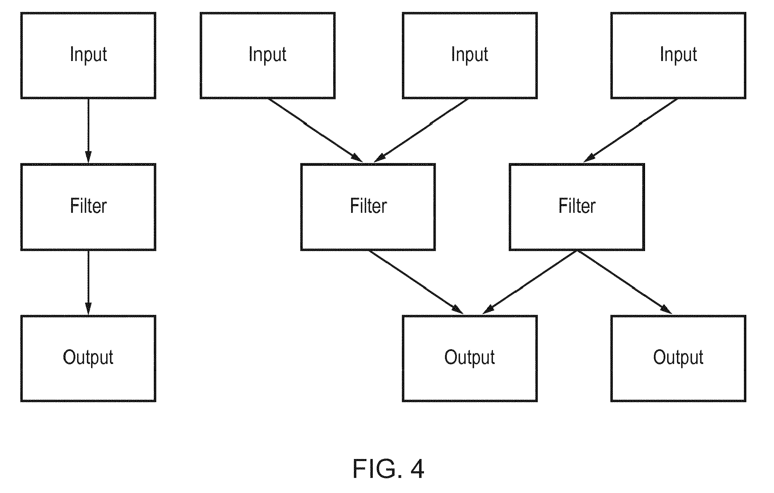

A system of trigger inputs, filters (which aggregate and transform the trigger inputs) and outputs (consumers) may be wired together in a flexible graphs of nodes, as shown in Figure 4. A filter may consume one or more trigger inputs, and gameplay outputs may be produced in dependence one or more filters.

The following is a non-exhaustive list of gameplay event consumers.

Game saves

A full game save may be triggered each time a particular event is consumed. No values need to be harvested from the event, the timing of the event is the important information - a new game save (optionally overwriting a previous one) is triggered with each input event, and typically sent to a cloud service, such as the game server 120, although local storage on the memory 153 of the computer device 150 is possible.

Construct as follows, where name can be used by the container to identify the saved state:

$$name = save(event)$$

- event (name of event to observe, e.g. level)

Tips and hints search

An event's value attribute is used as a search term, typically by using a preceding filter that uses a printf function, for example:

printf("%s level %d %s",event.title,event.value,event.platform)).

A new search is run each time an input event is received, and the search results are updated on a live results section of the user interface, which may be hidden/revealed by a toggle button or similar device.

The event output may be constructed as follows, where name can be used by the container to identify the results and differentiate between multiple search types:

$$name = hint\_search(event)$$

- event (name of event to observe, e.g. level)

Video search

As above, use an event's value attribute as a search term, typically by using a preceding filter that uses printf. For example:

printf("%s level %d %s",event.title,event.value,event.platform)).

A new search is run each time an input event is received, and the search results are updated on a live results section of the user interface, which may be hidden/revealed by a toggle button or similar device.

The event output may be constructed as follows, where name can be used by the container to identify the results and differentiate between multiple search types:

$$name = video\_search(event)$$

- event (name of event to observe, e.g. level)

Video creation

Chapter markers are embedded in recorded video, either to act as chapters or to facilitate editing of the video, and triggering persistence of video to cloud, requiring less memory on mobile devices. All properties of the observed event are available to embed within the video as metadata. This means that more versatile video production is achieved than by having a developer code the instructions directly into the game. A user is presented with a broader and more consistent range of options across a catalogue of games than previously possible.

The event output may be constructed as follows, where name can be used by the container to identify the saved video recording:

$$name = video\_create(event, intro, outro)$$

- event (name of event to observe, e.g. level)
- intro (the amount of time to pad before the start of the event)
- outro (the amount of time to pad after the end of the event)

Achievement search

An event's value attribute may be used as a search term for relevant achievements, typically by using a preceding filter that uses printf. For example:

    printf("%s level %d %s",event.title,event.value,event.platform)).

A new search is run by the event consumer each time an input event is received, and the search results are updated on a live results section of the user interface, which may be hidden/revealed by a toggle button or similar device. This means that at a given point in the game player's use of the game, a dynamically updated and intelligently pre-labelled list of results may be presented. If for example a player becomes stuck on a particular part of a game, the automatically updated search of a series of videos which have been pre-labelled may be presented to the user at any time.

The event output may be constructed as follows, where name can be used by the container to identify the results and differentiate between multiple search types:

$$name = achievement\_search(event)$$

- event (name of event to observe, e.g. level)

Achievement creation

The event properties extracted from the gameplay event attribute can be output and stored in an achievements database, where they may be filtered and/or transformed for presentation to users. In most cases, the event is constructed in such a way as to fully define the achievement.

The event output may be constructed as follows, where name can be used by the container to identify the results and differentiate between multiple search types:

$$name = achievement\_create(event)$$

- event (name of event to observe, e.g. level)

Advertisement

Use an event's value attribute as a search term for relevant advertisements, typically by using a preceding filter that uses printf. For example:

    printf("%s level %d %s", event.title,event.value,event.platform)).

A new search is run each time an input event is received, and the search results are updated on a live results section of the user interface, which may be hidden/revealed by a toggle button or similar device.

The event output may be constructed as follows, where name can be used by the container to identify the results and differentiate between multiple search types:

$$name = advert\_search(event)$$

- event (name of event to observe, e.g. level)

Banner

This displays a message on a banner owned by the software container. The banner may be overlaid on the portion of the screen displaying the game graphics, or it may be something like a badge over the icon in the task bar, or a message pop-up that fades quickly after display.

The event output may be constructed as follows, where name can be used by the container to identify the target banner for display:

$$name = banner\ (trigger,\ property)$$

- trigger (name of event to trigger display of the banner)
- property (display current value of property when trigger)

The event outputs listed above represent a non-exhaustive summary of the expanded user experience which can be provided with the present invention. The system improves accessibility in cases where an original game might be lacking. For example, an automated video editing and publishing environment for visually impaired users. Further, a game event might be constructed which takes a gameplay event and transforms an event normally associated with an audio cue into a video cue, or vice versa, to assist aurally or visually impaired users, respectively.

The gameplay event outputs may act to store information locally on the user's computing device, and equally an output can be transmitted directly to the remote server where further processing takes place.

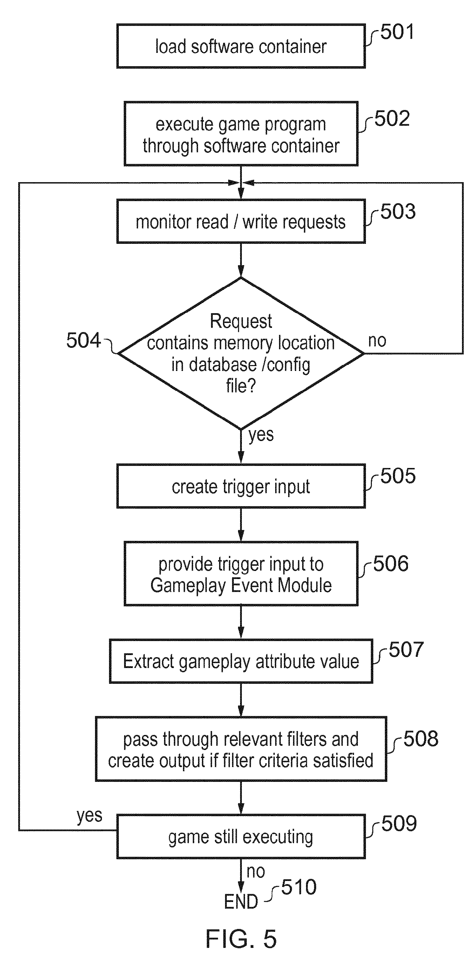

An outline of the method for producing a gameplay event output according to the invention is shown in Figure 5. At step 501, in response to a user of a computing device requesting to play a game using a gaming platform provided by an online game provider, a software container is loaded onto the computer device. The software container executes the game program at step 502, and the software container monitors the gameplay state by monitoring the memory read and write requests made by the game program at step 503. This is done as described above, using a database or configuration file which comprises a predefined list of memory locations (which may be a memory line number, or a byte position), to which a read or write request will elicit a response. The database/configuration file may be supplied with the software container each time a new instance is loaded onto the device, or the database/config. file may be retained on the user computer device for future use, and updates to the database/config. file provided when new features are added.

If a read request or a write request matches one of the predefined locations contained in the database or configuration file at step 504, the software container creates a trigger input at step 505. The trigger input is created and defined as outlined above, comprising parameters which are associated with the particular gameplay state type detected. The software container then provides the trigger input to the gameplay event module at step 506. The gameplay event module is arranged to inspect the trigger input (step 507) and optionally pass it through any filters which are associated with the gameplay state event to which the trigger input pertains (step 508). If the trigger event satisfies the relevant filter rules, examples of which are discussed above, a gameplay event output is produced. The trigger event category determines which filters the trigger event will be passed through. The system returns to monitoring the read and write requests made by the game program, unless the program is no longer running (and the event was a game save or a shut-down of the game), in which case the method ends at step 510.

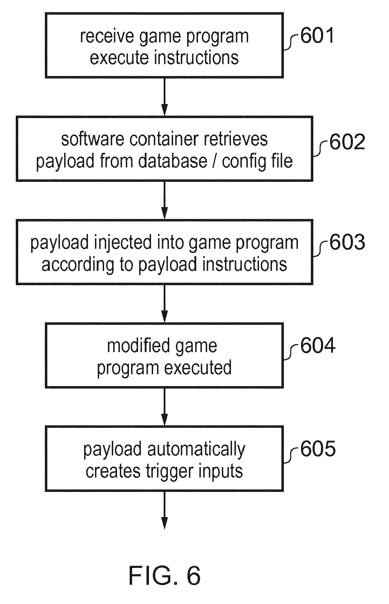

Figure 6 shows a variant method, in which code injection is applied by the software container, rather than the monitoring of the read and write requests of the game program. A software container is receives instructions from a user execute a game program at step 601, for example using a gaming platform provided by an online game provider. The software container retrieves a payload from a database/configuration file at step 602. The payload is injected into the game program according to payload instructions included in the configuration file (step 603). The modified game program is then executed within the software container in step 604. As the program is running, game program will run as normal, with the payload automatically producing trigger inputs as defined in the payload instructions, and described above (step 605). The method then proceeds in the same manner as that shown in Figure 5, wherein the trigger input is delivered to the gameplay event module.

**Claims**

1. A method of producing a gameplay event output, comprising:

    executing a game program using a software container, and at the software container,

        monitoring a current gameplay state of the game;
        detecting a predefined gameplay state;
        providing a trigger input comprising a gameplay state attribute to a gameplay event module, and in response to receiving a trigger input, at the gameplay event module, creating a gameplay event output in dependence upon the gameplay attribute value.

2. A method according to claim 1, further comprising providing a configuration table of predetermined memory locations, and wherein monitoring the current gameplay state of the game is done by checking the read requests and write requests that the game program makes to a memory, the trigger input being elicited when at the predefined gameplay state the program makes a read request or write request to one of the predetermined memory locations.

3. A method according to claim 1, wherein the execution of the program comprises retrieving a predefined payload from a database and inserting said payload into the program prior to launching the program, wherein the payload comprises instructions which when executed automatically elicit the trigger input.

4. A method according to any preceding claim, wherein the program produces a stream of output gameplay video and audio content which may be captured by the container, wherein creating the gameplay event output comprises automatically producing an output gameplay video.

5. A method according to claim 4 wherein creating the gameplay event output comprises selecting a start point and an end point of a portion of video and audio content in a buffer memory to automatically produce the output gameplay video.

6. A method according to any preceding claim, wherein creating the gameplay event output comprises creating metadata from the extracted gameplay state attribute value, the metadata relating to the gameplay state detected.

7. A method according to claim 6, wherein:

    the gameplay event output comprises a gameplay video; and
    creating metadata comprises inserting chapter markers into the gameplay video, the chapter markers including a textual label extracted from the event value attribute.

8. A method according to any preceding claim, wherein the gameplay output comprises performing a search using a search term is extracted from the event value attribute.

9. A method according to any preceding claim, further comprising detecting, at an event filter, a first trigger input and a second trigger input, and wherein creating the event output is done where the gameplay state attribute value of the second trigger input meets a predefined threshold criterion, and wherein the gameplay event output comprises a duration value, the duration value being the difference in time between detecting the first trigger input and the second trigger input.

10. A method according to any preceding claim, comprising:

    receiving, at the gameplay event module a plurality of trigger inputs, wherein the gameplay event output is created when a trigger input comprises a gameplay state attribute value which is higher than a predefined threshold criterion.

11. A method according to any preceding claim, wherein the gameplay event output is automatically published to a social network.

12. A computing device, arranged to carry out the method of any preceding claim.

**13.** A system, comprising

a server, comprising a processor running a gaming platform, the gaming platform arranged to receive a request from a user device to execute a game program, and arranged to provide a software container to a user computing device;

wherein:

the software container is arranged to execute the game program on the user device;

the software container is arranged to monitor a current gameplay state of the program and detect a predefined gameplay state, the detection of the predefined gameplay state eliciting a trigger input comprising a gameplay state attribute, the trigger input being provided by the software container to the gameplay event module, and the gameplay event module is arranged to:

create a gameplay event output in dependence upon the extracted attribute value in response to receiving a trigger input.

**14.** A system according to claim 13, wherein the program produces a stream of output gameplay video and audio content which may be captured by the container, and the gameplay event output comprises a gameplay video comprising a portion of the stream of output gameplay video and audio output, and the software container is arranged to upload the gameplay video to the server.

**15.** A system according to claim 13 or claim 14, wherein the software container is arranged to monitor the gameplay state of the game by checking the read requests and write requests that the game program makes to a memory, the trigger input being elicited when at the predefined gameplay state the program makes a read request or write request to one of the predetermined memory locations.

FIG. 1

FIG. 2

FIG. 3

FIG. 4

load software container ⌐501

execute game program through software container ⌐502

monitor read / write requests ⌐503

504⌐ Request contains memory location in database /config file?

no

yes

create trigger input ⌐505

provide trigger input to Gameplay Event Module ⌐506

Extract gameplay attribute value ⌐507

pass through relevant filters and create output if filter criteria satisfied ⌐508

yes

game still executing ⌐509

no

END ⌐510

FIG. 5

receive game program
execute instructions ⌐601

↓

software container retrieves
payload from database / config file ⌐602

↓

payload injected into game program
according to payload instructions ⌐603

↓

modified game
program executed ⌐604

↓

payload automatically
creates trigger inputs ⌐605

↓

FIG. 6

Europäisches
Patentamt

European
Patent Office

Office européen
des brevets

# EUROPEAN SEARCH REPORT

Application Number

EP 16 16 6387

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 745 893 A2 (SONY COMP ENTERTAINMENT US [US]) 25 June 2014 (2014-06-25) | 1,4,5, 9-14 | INV. A63F13/86 |
| Y | * paragraphs [0034], [0044], [0067], [0068] * <br> * paragraph [0111] - paragraphs [0115], [0161] * | 2,3,6-8, 15 | A63F13/798 A63F13/335 G06F9/455 |
| Y | WO 2006/124242 A2 (MICROSOFT CORP [US]) 23 November 2006 (2006-11-23) <br> * paragraph [0052] * | 2,6-8,15 | |
| Y | WO 2012/057955 A1 (MICROSOFT CORP [US]) 3 May 2012 (2012-05-03) <br> * paragraphs [0003], [0009], [0030], [0042], [0060], [0075] * | 2,6-8,15 | |
| Y | US 2012/100910 A1 (EICHORN DAVID M [US] ET AL) 26 April 2012 (2012-04-26) <br> * paragraphs [0010], [0016], [0027] * <br> * claims 5,18 * | 6-8 | |
| Y | WO 2015/026391 A1 (CONCURIX CORP [US]) 26 February 2015 (2015-02-26) <br> * paragraphs [0055], [0092] * | 3 | TECHNICAL FIELDS SEARCHED (IPC) <br> A63F <br> G06F <br> G07F |
| A | WO 2009/094611 A2 (SONY ONLINE ENTERTAINMENT LLC [US]; PEARCE NATHAN [US]) 30 July 2009 (2009-07-30) <br> * paragraphs [0048], [0093], [0122] * | 1-15 | |
| A | WO 2015/054376 A1 (GOOGLE INC [US]) 16 April 2015 (2015-04-16) <br> * paragraph [0024] * | 1-15 | |
| A | US 2015/080120 A1 (HAYASHIDA KOICHI [JP]) 19 March 2015 (2015-03-19) <br> * paragraphs [0041], [0066], [0067], [0115] * | 1-15 | |

-/--

The present search report has been drawn up for all claims

| Place of search | Date of completion of the search | Examiner |
|---|---|---|
| Munich | 27 January 2017 | Fischer, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 16 16 6387

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ARDALAN AMIRI SANI ET AL: "I/o paravirtualization at the device file boundary", ARCHITECTURAL SUPPORT FOR PROGRAMMING LANGUAGES AND OPERATING SYSTEMS, ACM, 2 PENN PLAZA, SUITE 701 NEW YORK NY 10121-0701 USA, 24 February 2014 (2014-02-24), pages 319-332, XP058044529, DOI: 10.1145/2541940.2541943 ISBN: 978-1-4503-2305-5 * Sec.4.1 * * Sec.6 * | 1-15 | |
| A | WU-CHANG FENG ET AL: "Stealth measurements for cheat detection in on-line games", NETWORK AND SYSTEM SUPPORT FOR GAMES, ACM, 2 PENN PLAZA, SUITE 701 NEW YORK NY 10121-0701 USA, 21 October 2008 (2008-10-21), pages 15-20, XP058105657, DOI: 10.1145/1517494.1517497 ISBN: 978-1-60558-132-3 * Sec.3.4 * | 3 | TECHNICAL FIELDS SEARCHED (IPC) |

The present search report has been drawn up for all claims

| Place of search | Date of completion of the search | Examiner |
|---|---|---|
| Munich | 27 January 2017 | Fischer, Jan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

    see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 16 16 6387

The Search Division considers that the present European patent application does not comply with the requirements of unity of invention and relates to several inventions or groups of inventions, namely:

    1. claims: 1, 2, 4-15

        Game event detection for automatic video production by monitoring memory accesses.

                ---

    2. claim: 3

        Game event detection for automatic video production by code injection into the executable file.

                ---

## ANNEX TO THE EUROPEAN SEARCH REPORT
## ON EUROPEAN PATENT APPLICATION NO.

EP 16 16 6387

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2017

| Patent document cited in search report | | Publication date | Patent family member(s) | | Publication date |
|---|---|---|---|---|---|
| EP 2745893 | A2 | 25-06-2014 | CN | 103885768 A | 25-06-2014 |
| | | | CN | 103886008 A | 25-06-2014 |
| | | | CN | 103886009 A | 25-06-2014 |
| | | | EP | 2745893 A2 | 25-06-2014 |
| WO 2006124242 | A2 | 23-11-2006 | CN | 101517536 A | 26-08-2009 |
| | | | EP | 1869852 A2 | 26-12-2007 |
| | | | JP | 5139975 B2 | 06-02-2013 |
| | | | JP | 2008545179 A | 11-12-2008 |
| | | | KR | 20080000638 A | 02-01-2008 |
| | | | US | 2007006178 A1 | 04-01-2007 |
| | | | WO | 2006124242 A2 | 23-11-2006 |
| WO 2012057955 | A1 | 03-05-2012 | AU | 2011320899 A1 | 02-05-2013 |
| | | | CA | 2815306 A1 | 03-05-2012 |
| | | | CN | 102521022 A | 27-06-2012 |
| | | | EP | 2633400 A1 | 04-09-2013 |
| | | | JP | 5961173 B2 | 02-08-2016 |
| | | | JP | 2013541113 A | 07-11-2013 |
| | | | US | 2012110570 A1 | 03-05-2012 |
| | | | WO | 2012057955 A1 | 03-05-2012 |
| US 2012100910 | A1 | 26-04-2012 | NONE | | |
| WO 2015026391 | A1 | 26-02-2015 | CN | 105723346 A | 29-06-2016 |
| | | | EP | 3036636 A1 | 29-06-2016 |
| | | | WO | 2015026391 A1 | 26-02-2015 |
| WO 2009094611 | A2 | 30-07-2009 | CN | 101981589 A | 23-02-2011 |
| | | | EP | 2252969 A2 | 24-11-2010 |
| | | | JP | 2011512172 A | 21-04-2011 |
| | | | KR | 20100118986 A | 08-11-2010 |
| | | | KR | 20130103817 A | 24-09-2013 |
| | | | WO | 2009094611 A2 | 30-07-2009 |
| WO 2015054376 | A1 | 16-04-2015 | CN | 105612548 A | 25-05-2016 |
| | | | EP | 3055828 A1 | 17-08-2016 |
| | | | KR | 20160065137 A | 08-06-2016 |
| | | | US | 2015099586 A1 | 09-04-2015 |
| | | | WO | 2015054376 A1 | 16-04-2015 |
| US 2015080120 | A1 | 19-03-2015 | JP | 2015058136 A | 30-03-2015 |
| | | | US | 2015080120 A1 | 19-03-2015 |

EPO FORM P0459

For more details about this annex : see Official Journal of the European Patent Office, No. 12/82